# EUROPEAN PATENT APPLICATION

(11) **EP 2 128 461 A1**
(43) Date of publication of application: **02.12.2009**
(21) Application number: 08104173.3
(22) Date of filing: 30.05.2008
(51) Int. Cl.: F16B 33/00, F16B 39/04

(54) **Nut locking system**

(71) Applicant: Alstom Technology Ltd, 5400 Baden (CH)
(72) Inventor: Hediger, Daniel, 5504 Othmarsingen (CH); Stallone, Francesco, 6600 Locarno (CH); Milazimi, Ardian, 5507, Mellingen (CH)

(57) **Abstract**

A nut locking system made from non-metallic components so as to be suitable for use in a high voltage generator that can easily be fitted and changed. The system comprises a threaded shaft (10) and a nut (20) characterised by: at least one flat face (14) extending along the shaft (10); at least one slot (22) extending through the top surface of the nut (26); and a fastening device (30) for locking the nut (20) so as to prevent the rotational movement of the nut (20). The slots (22) and the faces (14) being such that when the nut (20) is threaded onto the shaft (10) at least one face (14) is alignable with at least one slot (22) so as to enable the fitting of a fastening device (30) through at least one of the slots (22) thereby locking the nut.

## Description

### FIELD OF THE INVENTION

The invention relates to nut locking systems and more particularly to systems, made from non-metallic non- conducting material suitable for use in high voltage generators to lock a nut to a shaft so as to prevent rotation of the nut.

### STATE OF THE ART

Over time in service due to vibration, temperature cycling or other such factors nuts rotationally fastened to shafts loosen. To overcome this problem numerous solutions have been developed suitable for metallic systems. However, due to the different strength, stiffness and malleability characteristics of non-metallic materials, such as plastics and resins, such systems are not universally applicable.

For example, the flexibility and rigidity requirements of a flexible locking clip, described in US patent 5,362,111 providing a lockable connection between a shaft and a nut, render it unsuitable as a non-metallic locking system. Locking washers, like the one described in US patent 5,967,723, are similarly unsuitable due to the malleability requirement of the washer and are yet further disadvantaged by the extra torque load required to overcome the locking resistance imposed by the washer during tightening of the nut. While the extra torque load maybe insignificant for metallic systems the lower inherent strength of non-metallic systems means that the extra torque requirement has a significant impact on the practical torque that can be applied by the nut.

Another similarly deficient nut locking system, disclosed in US patent 6,896,463, comprises a cup capable of covering a fitted nut while being lockingly engageable with the shaft. This system is disadvantaged by the fact that unless the cup itself is retained by separate means it can itself disengage.

In order to overcome the inapplicability of known nut locking systems for metallic systems alternate solutions are used to lock non-metallic components. One method involves the use of binding resin applied to the thread covered by the nut. This method can be supplemented by the use of cord impregnated with binding resin wrapped around exposed threads of the shaft after the nut has been fitted. Such methods are however disadvantaged in that: resin requires setting time; readjustment of the nut is time consuming as it requires removal of locked parts and cleaning of surfaces in preparation for the reapplication of the locking resin; and health concerns are raised by potential exposure to resin chemicals. A yet further disadvantage is realized when the shaft and nut system are located in confined areas as application of the cord and binding resin requires good access.

As a result there is a need for alternative means of locking non-metallic nut and shaft components.

### SUMMARY OF THE INVENTION

The invention is intended to provide a means of fastening non-metallic components comprising a shaft fitted with a nut that overcomes the problems of methods using binding resins such that simple readjustment of the nut is possible.

This problem is solved by means of the subject matter of the independent claims. Advantageous embodiments are given in the dependant claims.

The invention is based on the general idea of providing a nut with slots that are alignable with flattened faces of a threaded shaft such that the insertion of a fastening device into the aligned slots acts as a wedge within the slot, locking the nut so by preventing rotation.

Provided in an aspect of the invention is a nut locking system made from non-metallic components so as to be suitable for use in a high voltage generator. The system comprises: a shaft with a thread extending from an end so as to define a threaded region; and a nut, threadable on the shaft thread, having a top surface defined, when fitted, by being biased toward the end of the shaft end. The system is characterised by: at least one flat face extending along the shaft corresponding at least in part to the threaded region of the shaft; at least one slot extending through the top surface of the nut; and a fastening device for locking the nut so as to prevent the rotational movement of the nut. The slots and the faces being such that when the nut is threaded on the shaft at least one shaft face is alignable with at least one nut slot so as to enable the fitting of a fastening device through at least one nut slot thereby locking the nut.

The system does not affect the fitting torque and is simple and so can be used in areas with restricted access. It is further advantaged by not requiring curing time or other complexities associated with resin locking systems and methods and so it is possible to easily and quickly readjust the nut.

In a further aspect the number of faces of the shaft is two and the faces are parallel enabling a fastening device to contact two opposing sides of the shaft at the same time so by enhancing the locking while additionally providing that alignment of the slots and grooves from any nut position can be achieved by turning the nut no more than half a turn.

In a yet further aspect the fastening device is a cable tie so as to provide a universally available, cheap fastening means. To further aid the retaining of the fastening device on the nut, the nut further comprises a groove on a side surface parallel to the top surface of the nut. When fitted the cable tie runs through the groove and so is prevented from sliding axially on the nut by the sides of the groove.

A yet further aspect of the invention provides a method for locking a nut having at least one slot extending through a top surface, to a shaft with a threaded region towards one end and having at least one flat face extending along the shaft corresponding at least in part to the threaded region. The method includes the steps of:
a) rotatingly positioning the nut on the shaft so as to align at least one slot with at least one face
b) fixing a fastening device through the slot so as to lock the nut to the shaft so by preventing rotational movement of the nut.

It is a further object of the invention to overcome or at least ameliorate the disadvantages and shortcomings of the prior art or provide a useful alternative.

Other objectives and advantages of the present invention will become apparent from the following description, taken in connection with the accompanying drawings wherein by way of illustration and example, an embodiment of the invention is disclosed.

### BRIEF DESCRIPTION OF THE DRAWINGS

By way of example, an embodiment of the invention is described more fully hereinafter with reference to the accompanying drawings, in which:
Figure 1 is a perspective view of a nut locking arrangement according to a preferred embodiment of the invention;
Figure 2 is an end view of the arrangement of Fig 1 showing a fastening device connected to the nut; and
Figure 3 is a side view of the nut of Fig. 1

### DETAILED DESCRIPTION OF THE INVENTION

Preferred embodiments of the present invention are now described with reference to the drawings, wherein like reference numerals are used to refer to like elements throughout. In the following description, for purposes of explanation, numerous specific details are set forth in order to provide a thorough understanding of the invention. It may be evident, however, that the invention may be practiced without these specific details.

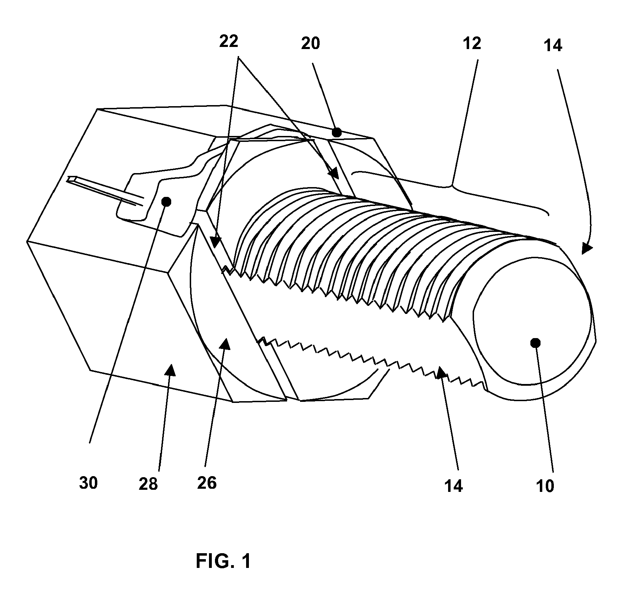

Fig 1 shows a nut locking system comprising a nut 20 and shaft 10 adapted to be lockable by a fastening device 30 that prevents the rotational movement of the nut 20 relative to the shaft 10. In order for the system to be suitable for use in a high voltage generator the parts of the system are made from non-conducting, non-metallic material such as fiber reinforced glass resin.

As shown in Fig 1 the shaft 10 has an end from which threads extend. In an embodiment, along at least part of the threaded region 12 at least one but preferably two preferably parallel flat faces 14 are formed. The purpose of the flat faces 14 is to provide a gripping area to aid the fastening device 10 in preventing nut rotational movement. As a result, the area of the chord formed on the flat face 14 at least in part defines the ability of the system to lock the nut 20 and so the sizing of the area is an important parameter. If the area is too small slippage will occur and the arrangement will not prevent the unfastening of the nut 20. If the area is too large unnecessary loss of thread length will detrimentally reduce the maximum allowable torque that can be applied by the nut 20.

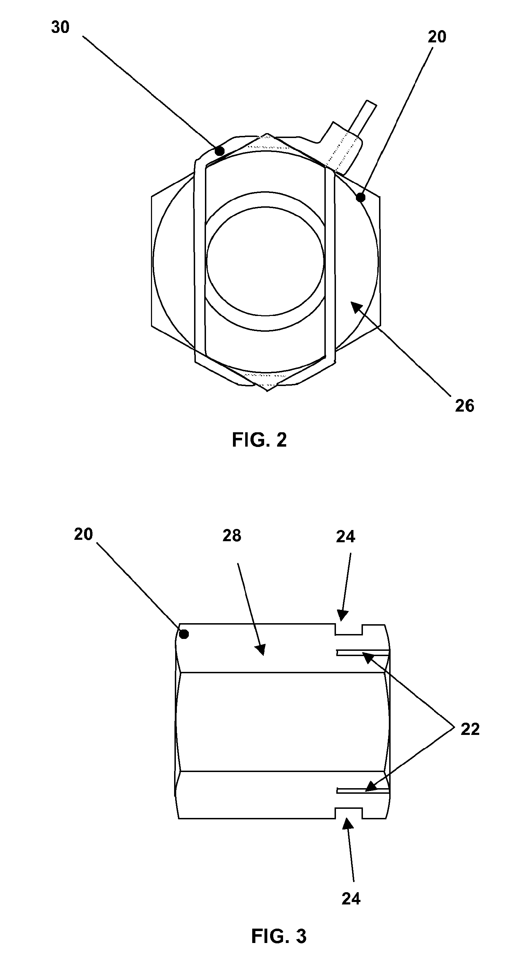

In an embodiment the nut 20 comprises at least one slot 22 but preferable two preferably parallel slots 22 that extend from the top surface 26 of the nut 22. The top surface 26 of the nut 20 is defined as the surface that, when the nut 20 is threaded on a shaft 10, is biased towards the threaded end of the shaft 10. The purpose of the slots 22 is to provide the means for a fastening device 30 to grip and interact with the nut 20 during locking of the nut 20. In order for this to be achieved the location of the slots 22 must conform to the arrangement of the faces 14 on the shaft so as to enable alignment between the slots 22 and faces 14 as shown in an embodiment exemplified in Fig 1 and 2. Unlike the example the number of slots 22 and faces 14 do not have to match and nor must all slots 22 be alignable with all faces 14 at the same time as long as alignment can made between at least one slot 22 with at least one face 14 such that the fastening device 30 can pass through the aligned slot 22 and prevent nut 20 rotation.

The slots 22 can be further enhanced to improve the retaining of the fastening device 30 by for example comprising parallel, curved, converging or diverging wall configurations. To further enhance the retaining of the fastening device 30 onto the nut 20, the nut 20 preferably includes a groove 24 parallel to the top surface 26 of the nut 20 in the slot region on the side surface 28 of the nut 20, as shown in Fig 3.The actual design and lay out of the slot 22 and groove 24 may however differ from the illustrated example depending on the form of the fastening device 30.

In a preferred embodiment, the fastening device 30 is a cable tie or similar device as shown in Figs 1 and 2 where the cable tie locks the nut 20 by passing through slots 22 aligned with faces 14 so as act as a wedge or squeezing loop that prevents nut 20 rotation based on the principle of preventing projection by rotation of shaft threads into slots 22 when they are aligned with faces 14. This is achieved by either filling the slot 22 and/ or squeezing surfaces of the slot 22 and faces 14 by, for example, the fastening device looping around the nut 20 and the shaft 10 as shown in Fig 2.

A method of locking the nut 20 therefore involves positioning the nut 20 on the shaft 10 so as to align at least one slot 22 with at least one face 14 and then fixing a fastening device 30 through the slot 22 so as to prevent rotational movement of the nut 20. Preferably the fastening device 30 is fixed by being looped around a portion of the nut 20 as shown in Fig 1 and 2 and preferably passes through a groove 24 in the nut 20. If the nut 20 needs to be repositioned, this can be done by cutting the cable tie, adjusting the nut 20, relocating the nut 20 to an aligning position and then reattaching the cable tie as previously described.

When required the material of the fastening device 30 can be selected so as to be suitable for the heat class of the machine. The form of the fastening device 30 may also vary and include arrangements that comprise plates or pins or other devices insertable through and retainable within slots 22 aligned with faces 14.

Although the invention has been herein shown and described in what is conceived to be the most practical and preferred embodiment, it is recognized that departures can be made within the scope of the invention, which is not to be limited to details described herein but is to be accorded the full scope of the appended claims so as to embrace any and all equivalent devices and apparatus.

### REFERENCE NUMBERS

10. Shaft
12. Threaded region
14. Shaft flat face
20. Nut
22. Slot in nut
24. Groove for supporting fastener 26. Nut top surface
28. Nut side surface
30 Fastening device

## Claims

1. A nut locking system made from non-metallic components so as to be suitable for use in a high voltage generator wherein said system comprises:
a shaft (10) with a thread extending from an end so as to define a threaded region (12); and
a nut (20), threadable onto said shaft thread, having a top surface (26) defined, when fitted, by being biased toward said shaft end,
the system **characterised by**:
at least one flat face (14) extending along the shaft in a region corresponding at least in part to the threaded region (12) of the shaft (10);
at least one slot (22) extending through said top surface of said nut (26); and
a fastening device (30) for locking said nut (20) so as to prevent the rotational movement of said nut (20),
wherein said slots (22) and said faces (14) being such that when said nut (20) is threaded onto said shaft (10) at least one said face (14) is alignable with at least one said slot (22) so as to enable the fitting of a fastening device (30) through at least one said slot (22) thereby locking said nut.

2. The system of claim 1 wherein the number of said faces (14) of said shaft(10) is two and said faces (14) are parallel.

3. The system of claim 1 wherein the number of said slots (22) is two.

4. The system of claim 3 wherein said slots (22) are parallel to each other.

5. The system of claim 1 wherein said fastening device (30) is a cable tie

6. The system of claim 1 wherein said nut further comprises a groove (24) on a side surface (28) parallel to said top surface (26) for retaining said fastening device (30)

7. A method for locking a nut (20) with at least one slot (22) extending through a top surface (26), to a shaft (10) with a threaded region (12) towards one end and having at least one flat face (14) extending along the shaft corresponding at least in part to said threaded region (12), the method including the steps of:
a) rotatingly positioning said nut (20) on said shaft (10) so as to align at least one said slot (22) with at least one said face (14); and
b) fixing a fastening device (30) through said slot (14) so as to lock said nut (20) to said shaft (10) so by preventing rotational movement of said nut (20).
